# EUROPÄISCHE PATENTSCHRIFT

(11) **EP 2 387 476 B1**
(45) Veröffentlichungstag und Bekanntmachung des Hinweises auf die Patenterteilung: **19.12.2012**
(21) Anmeldenummer: 09764472.8
(22) Anmeldetag: 01.09.2009
(51) Int. Cl.: B21F 45/24, F16B 15/08, F16B 27/00

(54) **STOFFSCHLÜSSIGE VERKLEBUNG DRAHTFÖRMIGER EINZELELEMENTE MITTELS ZWEISCHICHTSYSTEM AUF BASIS VON ACRYLATHARZEN**
BONDED ADHESION OF WIRE-SHAPED INDIVIDUAL ELEMENTS BY MEANS OF A TWO-LAYER ACRYLATE RESIN-BASED SYSTEM
COLLAGE AVEC FUSION DE LA MATIÈRE ENTRE DES ÉLÉMENTS INDIVIDUELS FILIFORMES À L'AIDE D'UN SYSTÈME À DEUX COUCHES À BASE DE RÉSINES ACRYLIQUES

(30) Priorität: 21.10.2008 DE 102008052619
(43) Veröffentlichungstag der Anmeldung: 23.11.2011
(73) Patentinhaber: Henkel AG & Co. KGaA, 40589 Düsseldorf (DE)
(72) Erfinder: KUNZ, Andreas, 42855 Remscheid (DE); STODT, Jürgen, 41466 Neuss (DE); ENDRES, Holger, 41470 Neuss (DE); SCHNEIDER, Wolfgang, 40764 Langenfeld (DE); BONEKAMP, Stefan, 40597 Düsseldorf (DE); PODWOISKI, Patrick, 40699 Erkrath (DE)
(86) Internationale Anmeldenummer: PCT/EP2009/061248
(87) Internationale Veröffentlichungsnummer: WO 2010/046169

(56) Entgegenhaltungen:
- WO-A1-94/14553
- DE-A1- 2 622 758
- DE-A1- 19 545 571
- US-A- 2 743 445
- US-A1- 2008 317 563

## Beschreibung

Die vorliegende Erfindung betrifft ein Verfahren zur stoffschlüssigen Verklebung bzw. Verbindung einer Mehrzahl von drahtförmigen Einzelelementen zu einer Anordnung, insbesondere zu einem Drahtband, wobei die benachbarte Einzelelemente Sollbruchstellen aufweisen, die das mechanische Herauslösen der Einzelelemente erlauben. Die stoffschlüssige Verbindung wird erfindungsgemäß mit einem Zweischichtsystem auf Basis von Acrylatharzen bestehend aus einer inneren Beschichtung (A) und einer äußeren Beschichtung (B) herbeigeführt, wobei die innere Beschichtung (A) eine geringere Härte aufweist als die äußere. Die Erfindung umfasst in einen weiteren Aspekt auch die Anordnung einer Mehrzahl von drahtförmigen Einzelelementen über eine solche stoffschlüssige Verbindung, insbesondere Drahtband.

Die Verklebung von drahtförmigen Einzelelementen ist ein im Stand der Technik bekannter Prozess für die Herstellung von Klammerstapeln. Die Durchmesser der Einzelelemente bzw. Einzeldrähte der Klammerstapel variieren dabei je nach Verwendung und Art der Befestigung mittels Klammer. Für Feinstdrahtklammern in Büroanwendungen ist ein Durchmesser der Einzeldrähte von nicht mehr als 0,6 mm typisch, während Feindrahtklammern mit einem Durchmesser von nicht mehr als 1 mm die am häufigsten gefertigten Heftklammern mit dem größten Einsatzbereich darstellen. Industriedrahtklammern hingegen weisen Drahtdurchmesser von üblicherweise mehr als 1 mm auf, wobei Drahtklammem mit einem Durchmesser von mehr als 5 mm kaum mehr eine technische Bedeutung haben.

Metallische Heftklammern haben mit Abstand die größte technische Bedeutung und werden im Allgemeinen nach zwei Techniken hergestellt, und zwar erstens mittels einer Drahtziehmaschine, durch die ein Draht geführt, die einzelnen Heftklammern abgeschnitten und ihre Enden angeschärft werden, worauf die einzelnen Heftklammern auf eine im wesentlichen U-förmige Schiene gepackt werden. Auf die Oberseite und die Seitenflächen der einzelnen auf der Schiene benachbarte Heftklammern berührenden Heftklammern wird zumeist lösungsmittelhaltiger Klebelack aufgebracht. Überschüssiger Klebstoff wird mittels einer Klinge oder eines Abstreifers abgestreift und die Heftklammern werden anschließend zum Austreiben des Lösungsmittels beispielsweise durch elektrisches Erwärmen der Schiene oder durch Einschieben in einen Ofen erhitzt. Nach einer zweiten bekannten Technik wird eine Anzahl von Drähten, beispielsweise mehrere hundert Drähte zu einem flachen Band nebeneinander gelegt und das Band an seiner Unterseite und/oder an seiner Oberseite mit Lack beschichtet ("Linienbandverfahren"). Nach dem Trocknen wird das Drahtband aufgerollt, das aufgerollte Drahtband wird später zu Heftklammerstreifen geschnitten und gebogen.
Nach beiden bekannten Verfahren oder nach deren Abwandlungen wird üblicherweise ein lackartiger Stoff auf Lösungsmittelbasis verwendet, wobei die Viskosität und der Feststoffgehalt sorgfältig einzustellen sind. Dies bedingt eine lediglich begrenzte Herstellungsgeschwindigkeit, da das Lösemittel zunächst vollständig aus der klebenden Beschichtung über eine zeitintensive Wärmebehandlung entfernt werden muss. Ein solches Herstellverfahren von Klammerstapeln mit lösemittelhaltigen Klebstoffrezepturen ist in der DE 19545571 offenbart.

Ein lösemittelfreies Verfahren mit UV-härtenden Verklebung von parallel angeordneten Einzeldrähten in einem Linienbandverfahren zur Herstellung von aufgerollten Drahtbändern ist in der WO 94/14553 beschrieben.

Ebenso lehrt die DE 2622758 ein verbessertes Verfahren zur Herstellung von metallischen Klammerstapeln, bei dem das Aufbringen eines Klebstoffs in Form einer strahlungsaushärtenden, lösungsmittelfreien, polymeren Mischung auf eine Anzahl von nebeneinander angeordneten metallischen Einzelklammern bzw. -drähten erfolgt. Als Lacksysteme sind insbesondere Kunstharze auf der Basis von Acrylat-modifizierten Polyurethanen, Polyethern, Polyestern und Epoxiden geeignet, die in Gegenwart von multifunktionalen vernetzenden Acrylaten und monofunktionalen Acrylatverdünnungsmittel unter UV-Bestrahlung aushärten. Die DE 2622758 lehrt jedoch das Aufbringen eines Einschichtsystems, so dass die Möglichkeiten zur Regulierung der Integrität der verklebten Klammerstapel begrenzt sind. Unter Integrität versteht der Fachmann in der Fertigung von Klammerstapeln die mechanische Stabilität des verklebten Stapels bei gleichzeitiger hinreichender Flexibilität des Verbundes beispielsweise für das Aufwickeln von Drahtband auf eine Rolle im Linienbandverfahren.

Das Lacksystem ist daher so abzustimmen, dass die polymere Beschichtung weder zu weich, was einen hohen Abrieb der Pressbacken bei der Umformung des Drahtbandes ergeben würde, der schnell zum Stillstand des Produktionsprozesses führen kann, noch zu hart ist und so die Heftklammern zu leicht an ihrer Sollbruchstelle abgelöst werden würden, was zu Reklamationen beim Endverbraucher führen kann.

Die Aufgabe der vorliegenden Erfindung besteht nunmehr darin, eine Anordnung von drahtförmigen Einzelelementen, insbesondere von Einzeldrähten, als Magazin bzw. Stapel von Befestigungselementen derart stoffschlüssig zu verbinden bzw. zu verkleben, dass einerseits Sollbruchstellen zwischen benachbarten Einzelelementen entstehen, andererseits die gesamte Anordnung einer Mehrzahl der Einzelelemente, insbesondere das Drahtband, eine für die Handhabung genügende Stabilität und Flexibilität aufweist, so dass auch eine nachträgliche Umformung der Anordnung, insbesondere des Drahtbandes, ermöglicht wird. Eine solche Anordnung, insbesondere ein solches Drahtband, soll in einem im Vergleich zum Stand der Technik rationalen und umweltschonenden Verfahren gefertigt werden, in dem nahezu vollständig auf den Einsatz lösemittelhaltiger Klebstoffzusammensetzungen verzichtet werden kann.

Diese Aufgabe wird gelöst mittels eines Verfahrens zur Herstellung einer Anordnung aus einer Mehrzahl von drahtförmigen Einzelelementen, bei der jedes Einzelelement im Wesentlichen dieselbe Raumform aufweist und bei der zwei benachbarte Einzelelemente jeweils über eine stoffschlüssige Verbindung miteinander verbunden sind, die derart ausgestaltet ist, dass eine Sollbruchfläche zur Trennung der Einzelelemente voneinander ausgebildet ist, wobei das Verfahren mindestens die folgenden Verfahrensschritte umfasst:
i) Anordnen einer Mehrzahl von drahtförmigen Einzelelementen in einer Ebene parallel nebeneinander oder parallel zur vom Einzelelement definierten Ebene und in Kontakt miteinander,
ii) ein- oder beidseitiges Beschichten dieser Anordnung mit einer ersten Zusammensetzung, die durch Strahlungseinwirkung härtbare Polymere mit Acrylatgruppen sowie innere oder äußere Weichmacher enthält,
iii) Härten der im Schritt b) aufgebrachten Beschichtung (A) durch Einwirkung von Strahlung, vorzugsweise von UV-Strahlung,
iv) ein- oder beidseitiges Überschichten der in Schritt c) gehärteten ersten Zusammensetzung mit einer zweiten Zusammensetzung,
   die durch Strahlungswirkung härtbare Polymere mit Acrylatgruppen enthält und die so zusammengesetzt ist, dass sie nach dem Härten eine größere Härte aufweist als die gehärtete erste Zusammensetzung,
v) Härten der im Schritt b) aufgebrachten Beschichtung (B) durch Einwirkung von Strahlung, vorzugsweise von UV-Strahlung.

Bei den drahtförmigen Einzelelementen handelt es sich um Drähte oder um aus Draht geformte Einzelelemente, wobei das geformte drahtförmige Einzelelement als Ganzes in einer Ebene liegt. Im Sinne der Erfindung werden unter drahtförmigen Einzelelementen nicht nur zylindrische Drähte oder aus diesen geformte Einzelelemente verstanden, sondern ebenfalls Anordnungen aus gewalzten Drähten mit nicht zylindrischem Querschnitt. Solche gewalzten Drähte entstehen beispielsweise bei der mechanischen Anordnung von Einzeldrähten mittels Richt- und Stauchrollen zu Bändern bei der Heftklammerherstellung im Linienbandverfahren, bei dem zur Verklebung auf die Anordnung flachgewalzter drahtförmiger Einzelelemente abgezielt wird.

Unter der Raumform wird erfindungsgemäß die exakte dreidimensionale Form des Einzelelementes verstanden. Diese kann in einer bestimmten Ausgestaltung des Drahtes selbst oder in der auf einer bestimmen Art und Weise vorgenommenen Umformung des Drahtes begründet sein. Eine im Sinne der vorliegenden Erfindung bevorzugte Raumform ist der gestreckte und gewalzte Draht oder der zu einer Klammer in U-Form umgeformte Draht. Weiterhin bevorzugt sind drahtförmige Einzelelemente mit einer maximalen Querschnittsbreite des Drahtes von nicht mehr als 5 mm, besonders bevorzugt von nicht mehr als 2 mm, wobei eine maximale Querschnittsbreite von zumindest 0,2 mm bevorzugt ist.

Eine stoffschlüssige Verbindung im Sinne der Erfindung liegt dann vor, wenn jedes drahtförmige Einzelelement mit seinen benachbarten drahtförmigen Einzelelementen zumindest partiell über eine Materialbrücke verbunden ist, wobei das Material aus organischen Polymeren besteht.

Die Sollbruchfläche liegt nach erfindungsgemäßer Definition demnach in einer Ebene, die benachbarte drahtförmige Einzelelemente spiegelbildlich von einander trennt. Die Sollbruchfläche verläuft demnach stets durch die stoffschlüssige Verbindung zwischen zwei benachbarten drahtförmigen Einzelelementen.

Für die Durchführung des erfindungsgemäßen Verfahren kann der Fachmann die Härte der Beschichtungen (A) und (B) vorab an den jeweiligen auf Glasoberflächen in definierter Nassfilmdicke aufgebrachten und ausgehärteten Zusammensetzungen mittels standardisierter Prüfmethoden bestimmen. Die Prüfung der Härte unmittelbar an der stoffschlüssigen Verbindung der Anordnung der Mehrzahl von drahtförmigen Einzelelementen ist ebenfalls möglich, aber experimentell ungleich aufwendiger.

Das erfindungsgemäße Verfahren ist zur Verwendung für Oberflächen aus Eisenwerkstoffen, Stahl und legiertem Stahl, Leichtmetallen wie Aluminium, Magnesium, Titan, Buntmetallen, wie Kupfer, Zink, Zinn oder Edelmetallen, wie Gold, Silber, oder deren Legierungen geeignet. Dabei kann die Oberfläche der drahtförmigen Einzelelemente geschliffen, gebürstet, poliert, elektrochemisch behandelt oder elektrolytisch beschichtet, z.B. verzinkt, cadmiert, verchromt oder vernickelt sein. Auch metallisierte drahtförmige Einzelelemente aus Kunststoff und drahtförmige Kunststoffe sind geeignet.

Erfindungsgemäß werden die im Schritt i) ausgerichteten bzw. angeordneten drahtförmigen Einzelelemente in den Schritten ii) und iii) mit einer ersten Acrylat-basierten Beschichtung (A) versehen, die als sogenannte Primerbeschichtung bereits eine erste stoffschlüssige Verbindung zwischen den Einzelelementen herstellt. In dieser Beschichtung (A) befinden sich erfindungsgemäß innere und/oder äußere Weichmacher, die die Aufgabe haben der ausgehärteten polymeren Materialbrücke eine für die Handhabung der Anordnung der Einzelelemente notwendige mechanische Flexibilität zu verleihen. Äußere Weichmacher sind im erfindungsgemäßen Verfahren Substanzen mit einem Siedepunkt von mehr als 250 °C und guter Löslichkeit im Polymersystem. Bevorzugt sind solche inneren Weichmacher, die aufgrund ihrer Funktionalität befähigt sind, mit dem Polymergrundgerüst chemische Bindungen einzugehen, so dass diese Art von Weichmacher nicht aufgrund physikalischer Prozesse aus dem inneren der Beschichtung an die Oberfläche oder in Zwischenschichten migrieren kann, was eine unerwünschte Veränderung der Härte der Beschichtung zur Folge hätte. Bevorzugte innere Weichmacher im Sinne der Erfindung sind solche, die zumindest eine ungesättigte Doppelbindung aufweisen und so über Radikalabbaureaktionen während des Aushärtevorganges oder im Anschluss daran an das Polymergrundgerüst gebunden werden können.

Die jeweiligen Zusammensetzungen der Schritte ii) und iv) des erfindungsgemäßen Verfahrens zeichnen sich vorzugsweise darin aus, dass sowohl die erste als auch die zweite Zusammensetzung jeweils weniger als 2 Gew.-%, besonders bevorzugt weniger als 0,5 Gew.-% an Komponenten enthalten, die beim Aushärten der Beschichtung verdampfen. Dies gelingt vorzugsweise dadurch, dass ein Anteil an flüssigen strahlungshärtenden Acrylat-haltige Verbindungen in den Zusammensetzungen eingesetzt wird, der als sogenannter Reaktivverdünneranteil die Solubilisierung fester Bestandteile, beispielsweise der Acrylat-modifizierten Polymere, übernimmt und zugleich die Einstellung der Viskosität der jeweiligen Zusammensetzung in weiten Bereichen erlaubt.

Die erste strahlungshärtbare Zusammensetzung des Schrittes ii) des erfindungsgemäßen Verfahrens ist vorzugsweise so auszuwählen, dass für einen ausgehärteten freien Film dieser ersten Zusammensetzung mit einer Dicke von 1 mm und einer Länge und Breite von 1 cm eine maximale Streckung des ausgehärteten Filmes von mehr als 5 mm, vorzugsweise von mehr als 10 mm resultiert, bei der der ausgehärtete Film abreißt.
Umgekehrt ist die zweite strahlungshärtbare Zusammensetzung des Schrittes ii) des erfindungsgemäßen Verfahrens vorzugsweise derart zusammengesetzt, dass für einen ausgehärteten freien Film dieser ersten Zusammensetzung mit einer Dicke von 1 mm und einer Länge und Breite von 1 cm eine maximale Streckung des ausgehärteten Filmes von nicht mehr als 5 mm resultiert, bei der der ausgehärtete Film abreißt.
Der freie Film der beiden Zusammensetzungen der Schritte ii) und iv), die Polymere mit Acrylat-Gruppen enthalten, ist experimentell durch Strahlungswirkung auf eine in der entsprechenden Nassfilmdicke auf eine Glasoberfläche aufgebrachten Zusammensetzung zugänglich, da die ausgehärteten Beschichtungen (A) und (B) nicht auf den Glasoberflächen haften.
Eine solche Abstimmung der Formulierung der Zusammensetzungen hinsichtlich der zuvorgenannten mit der Härte der Beschichtungen (A) und (B) korrelierenden Prüfgröße bewirkt eine optimale Integrität, d.h. Stabilität und Flexibilität, der Anordnung von stoffschlüssig miteinander verbundenen drahtförmigen Einzelelementen für deren Verwendung als Magazin von einzelnen drahtförmigen Befestigungselementen, insbesondere für Heftklammerstapel.

Zusätzlich sind im erfindungsgemäßen Verfahren zur verbesserten Haftung der Beschichtung (A) auf metallischen Oberflächen und damit auch für eine verbesserte stoffschlüssige Verbindung von metallischen drahtförmigen Einzelelementen der Anordnung solche erste Zusammensetzungen bevorzugt, die ein Säuregruppen-haltiges Polymer enthalten. Zudem wird durch den Zusatz von Säuregruppen-haltigen Polymeren die Haftung der Beschichtung (A) zur Beschichtung (B) deutlich verbessert. Insbesondere bevorzugt sind für erste Zusammensetzung im Schritt ii) des erfindungsgemäßen Verfahrens saure Gruppen aufweisende (Meth)- acrylatverbindungen, die eine, zwei oder mehrere (Meth)acrylgruppen aufweisen und zusätzlich saure funktionelle Reste enthalten. Die Menge dieser Komponente soll weiterhin vorzugsweise zwischen 0,1 und 20 Gew.-% liegen, insbesondere bevorzugt zwischen 0,5 und 10 Gew.-%. Beispiele für solche sauren funktionellen Gruppen sind Carboxyl-gruppen, Phosphor- oder Phosphonsäuregruppen, Sulfonsäuregruppen sowie deren Derivate, wie z.B. Ester. Insbesondere sind für eine erste Zusammensetzung gemäß Schritt ii) des erfindungsgemäßen Verfahrens phosphorsaure Gruppen bevorzugt.

Die jeweiligen Zusammensetzungen in den Schritten ii) und iv) des erfindungsgemäßen Verfahrens enthalten bevorzugt strahlungshärtbare polymere Verbindungen mit ungesättigten Doppelbindungen, wie beispielsweise Polyester- oder Polyetheroligomere mit seitenständigen oder endständigen (Meth)acrylgruppen, oder bevorzugt (Meth)acrylat-funktionelle aliphatische, cycloaliphatische und/oder aromatische Epoxidverbindungen oder Polyurethanoligomere mit reaktiven (Meth)acrylatgruppen. Diese polymeren bzw. oligomeren Verbindungen sollen mindestens zwei funktionelle ungesättigte Doppelbindungen aufweisen und haben im Allgemeinen ein Molekulargewicht zwischen 500 und 15000. Sie sind kommerziell erhältlich. Die Menge beträgt 40 bis 90, insbesondere 45 bis 85 Gew.%, wobei auch Gemische verschiedener dieser strahlungshärtbaren polymeren bzw. oligomeren Verbindungen möglich sind.

Weiterhin soll in den jeweiligen Zusammensetzungen in den Schritten ii) und iv) des erfindungsgemäßen Verfahrens vorzugsweise mindestens ein mono-, di-, tri- oder poly-funktionelles ungesättigtes niedermolekulares (Meth)acrylat enthalten sein, wobei einzelne Verbindungen oder Gemische vorliegen können. Beispiele für solche Verbindungen sind: ggf. alkoxylierte Alkandiol- oder Alkantriol(meth)-acrylate wie 1,3-Butylenglykoldi(meth)acrylat, 1,4-Butandioldi(meth)acrylat, 1,6-Hexandiol-di(meth)acrylat, Trialkylenglykoldi(meth)acrylat, Polyalkylenglykoldi-(meth)acrylat, Tetraalkylenglykoldi(meth)acrylat, Neopentylglykoldi(meth)acrylat, Glycerinalkoxy tri(meth)acrylat, alkoxyliertes Neopentylglykoldi(meth)acrylat; (Meth)acryl-Epoxid-Verbindungen, wie Bisphenol-A-Epoxid-di(meth)acrylat; Polyhydroxy(meth)acrylate wie Pentaerythritoltri(meth)acrylat, Trimethylolpropan-tri(meth)acrylat, Trisalkoxy-Trimethylolpropan-tri(meth)acrylat, Di-trimethylolpropantetra(meth)acrylat, Pentaerythritoltetra(meth)acrylat, Tris-(2-hydroxyalkyl)-isocyanurat-tri(meth)acrylat, Dipentaeythritoltetra(meth)acrylat, Dipentaerythritolpenta(meth)acrylat, Dipentaerythritolhexa(meth)acrylat, wobei alkylen ethylen, propylen oder butylen und alkoxy, ethoxy, 1,2- oder 1,3-propoxy oder 1,4-butoxy bedeuten.

Als monofunktionelle Acrylatverbindungen können beispielsweise die folgenden (Meth)acrylate verwendet werden: lineare, verzweigte oder cyclische Alkyl(meth)-acrylate wie n-/iso-Alkyl(meth)acrylat, Cyclohexyl(meth)acrylat, 4-tert.-Butylcyclohexyl(meth)acrylat, Dihydrocyclopentadienyl(meth)acrylat, Tetrahydrofurfuryl (meth)acrylat, Isobornyl(meth)acrylat, Allyl(meth)acrylat, Mono(meth)acryloylalkylphthalat, -succinat oder -maleinat; Alkandiolmono(meth)acrylate, wie Hydroxypropyl(meth)acrylat, Polyalkylenglykol(meth)acrylat, Monoalkoxytrialkylenglykol-(meth)acrylat, 2,3-Epoxypropyl(meth)acrylat; aromatische (Meth)acrylate wie Nonylphenol(meth)acrylat, 2-Phenoxyalkyl(meth)acrylat; Acrylamide wie N,N-Di-alkyl(meth)acrylamid, N,N-Dialkylaminoalkyl(meth)-acrylamid. Weiterhin sind auch anteilsweise Vinylether einsetzbar, wie z.B. Vinylethylether, Vinylpropylether, Vinylisobutylether, Vinyldodecylether, Butandiol-1,4-divinylether, Diethylenglykol-divinylether, Hydroxybutylvinylether.
Die monomeren mono-, di-, tri- oder poly-funktionellen ungesättigten niedermolekularen (Meth)acrylatverbindungen können einzeln oder als Gemisch vorliegen, wobei die Gesamtmenge vorzugsweise zwischen 5 bis 60, insbesondere zwischen 10 bis 55 Gew.-% betragen soll.

Als Fotoinitiatoren können die bekannten bevorzugt radikalischen Initiatoren eingesetzt werden, wie beispielsweise 2-Benzyl-dimethylamino-1-(4-morpholinophenyl)-butanon-1, Benzildimethylketal-dimethoxyphenylacetophenon, α-Hydroxybenzylphenylketon, 1-Hydroxy-1-methylethyl-phenylketon, Oligo-2-Hydroxy-2-methyl-1-(4-(1-methylvinyl)phenyl)propanon, Benzophenon, Methyl-orthobenzoylbenzoat, Methylbenzoylformat, 2,2-Diethoxyacetophenon, 2,2-di-sec. Butoxyacetophenon, p-Phenylbenzophenon, 2-Isopropylthioxanthon, 2-Methyl-anthrachinon, 2-Ethylanthrachinon, 2-Chloranthrachinon, 1,2-Benzanthrachinon, Benzil, Benzoin, Benzoinmethylether, Benzoinisopropylether, α-Phenylbenzoin, Thioxanthon, Diethylthioxanthon, 1,5-Acetonaphthalin, 1-Hydroxycyclohexyl-phenylketon, Ethyl-p-dimethylaminobenzoat.
Diese können einzeln oder im Gemisch verwendet werden oder mit weiteren Radikalinitiatoren vom Peroxidtyp oder aminischen Beschleunigern kombiniert werden.

Neben den vorgenannten Komponenten können die jeweiligen Zusammensetzungen in den Schritten ii) und iv) des erfindungsgemäßen Verfahrens noch geringe Mengen von Additiven enthalten, die beispielsweise Verlaufseigenschaften, Filmbildung oder Beständigkeit der jeweiligen Zusammensetzung im Schritt ii) oder iv) vorteilhaft beeinflussen. Beispiele hierfür sind Verlaufsmittel, wie fluorierte Polysiliconglykole, Silikonglykole, Polyether-Polysiloxancopolymere. Als Lichtschutzmittel können die bekannten Mittel auf Basis von sterisch gehinderten Aminoverbindungen eingesetzt werden. Für eine höhere Oberflächenglätte und zur Reduzierung der Oberflächenklebrigkeit der strahlungsgehärteten Zusammensetzungen können Wachse als Filmbildungsmittel hinzugefügt werden. Vorzugsweise sind die Wachse in der Komponente b) der jeweiligen Zusammensetzung dispergierbar und/oder löslich, so dass stabile Formulierungen mit hoher Lagerstabilität und guten Filmbildungseigenschaften erhältlich sind. Um die Migration der Wachsbestandteile aus der Beschichtung hinaus zu verhindern, ist es weiterhin bevorzugt, dass die Wachse chemisch funktionalisiert vorliegen, so dass sie an das Polymergrundgerüst binden.

Weiterhin können fakultativ Farbstoffe, optische Aufheller und/oder Pigmente als Additive in der jeweiligen Zusammensetzung gemäß den Schritten ii) und iv) im erfindungsgemäßen Verfahren enthalten sein. Farbstoffe sind solche auf Basis organischer Farbstoffe, die in der jeweiligen Zusammensetzung löslich sind. Diese bilden nach dem Aushärten des Films gefärbte transparente Überzüge und können zusammen mit der Substratoberfläche spezielle optische Effekte hervorrufen. Optische Aufheller sind solche Verbindungen, die UV-Strahlung absorbieren und im sichtbaren Licht wieder abstrahlen, beispielsweise ausgewählt aus den Triazinderivaten. Unter Pigmenten werden organische oder anorganische bunte oder unbunte Pigmentzubereitungen verstanden, wie Eisenoxidpigmente, Titandioxidpigmente, Chinacrydon- oder Phthalocyaninpigmente. Diese müssen homogen im Überzugsmittel verteilt sein. Dabei muss die Teilchengröße wesentlich unterhalb der beabsichtigten Schichtdicke liegen, bevorzugt unterhalb von 1 µm. Es kann vorteilhaft sein diese Bestandteile in Anteilen der flüssigen Acrylatverbindungen vor der Zugabe zum Überzugsmittel zu dispergieren. Die zuvor genannten anorganischen Pigmente können, wenn sie lediglich in der zweiten Zusammensetzung im Schritt iv) des erfindungsgemäßen Verfahren eingesetzt werden, gegenteilig zu den Weichmachern die Härte der Beschichtung (B) erhöhen.

Weiterhin können auch mikronisierte Füllstoffe wie z.B. Kieselsäure, Aluminiumoxid, Titandioxid oder Bariumsulfat eingesetzt werden. Diese sind weiß, farblos oder opak/transparent und werden in feindispergierter Form eingesetzt. Sie können je nach Menge und Typ ebenfalls die Härte der Beschichtungen (A) und (B) beeinflussen.

Die Menge der Hilfsstoffe, wobei die Fotoinitiatoren mit eingeschlossen sind, soll vorzugsweise zwischen 0,1 bis 20 Gew.-% betragen, besonders bevorzugt 0,5 bis 15 Gew.-%.

Darüber hinaus können in einer bevorzugten Ausführungsform antibakteriell oder biozid wirkende Verbindungen im Überzugsmittel enthalten sein. Es handelt sich dabei beispielsweise um organische Substanzen, wie Bioguanidine, substituierte Benzalkoniumhalogenide, Alkyl-Polyvinylpyridine, Betaine oder um anorganische Verbindungen, wie Silbersalze oder feinverteilte Silberpartikel im Teilchengrößenbereich von wenigen nm. Die Menge soll 0,1 bis 5 Gew.-% betragen. Sie ist von der Wirksamkeit der eingesetzten Substanz abhängig. Diese Verbindungen werden im Überzugsmittel eingearbeitet und bei der Vernetzungsreaktion nicht zerstört. Sie führen zu langfristig antibakteriell wirkenden Oberflächen.

Die Bestandteile des erfindungsgemäßen Überzugsmittels können nach bekannten Verfahren gemischt werden. Dabei kann es zweckmäßig sein feste Komponenten in niedrigviskosen Komponenten zu lösen oder z. B. bei Pigmenten zu dispergieren. Um eine Lagerstabilität sicherzustellen kann es bei speziellen reaktiven Bestandteilen günstig sein, diese in niedrigviskosen Komponenten vor der Zugabe zum Überzugsmittel vorzumischen und eine mögliche Reaktion zu begrenzen.

Bevorzugte erste Zusammensetzungen für den Schritt ii) des erfindungsgemäßen Verfahrens enthalten demnach folgende Komponenten:
a) 40 bis 90 Gew.-%, besonders bevorzugt 45 bis 85 Gew.-% mindestens eines oligomeren linearen oder verzweigten Epoxy-, Polyester-, Polyether- und/oder Polyurethan-(Meth)acrylats,
b) 5 bis 60 Gew.-%, besonders bevorzugt 10 bis 55 Gew.-% mindestens einer monofunktionellen flüssigen (Meth)acrylat- oder di-, tri-, oder poly(Meth)acrylatverbindung,
c) 0,1 bis 20 Gew.-% mindestens einer saure Gruppen enthaltenden (Meth)acrylatverbindung, sowie
d) insgesamt 0,1 bis 20 Gew.-% Fotoinitiatoren sowie gegebenenfalls lacktechnische Hilfsstoffe ausgewählt aus Verlaufsmitteln, Pigmenten, Farbstoffen, Füllstoffen und/oder Lichtschutzmitteln, und
e) insgesamt 0,5 bis 20 Gew.-%, besonders bevorzugt 2 bis 10 Gew.-% innerer und/oder äußerer Weichmacher vorzugsweise ausgewählt aus Phthalaten, Glycerin-Fettsäure-Estern oder flüssigen ungesättigten niedermolekularen Verbindungen, die keine Komponenten a) oder b) darstellen.

Demgegenüber enthalten zweite Zusammensetzungen für den Schritt iv) des erfindungsgemäßen Verfahrens vorzugsweise folgende Komponenten:
a) 40 bis 90 Gew.-%, besonders bevorzugt 45 bis 85 Gew.-% mindestens eines oligomeren linearen oder verzweigten Epoxy-, Polyester-, Polyether- und/oder Polyurethan-(Meth)acrylats,
b) 5 bis 60 Gew.-%, besonders bevorzugt 10 bis 55 Gew.-% mindestens einer monofunktionellen flüssigen (Meth)acrylat- oder di-, tri-, oder poly(Meth)acrylatverbindung,
c) insgesamt 0,1 bis 20 Gew.-% Fotoinitiatoren sowie gegebenenfalls lacktechnische Hilfsstoffe ausgewählt aus Verlaufsmitteln, Pigmenten, Farbstoffen, Füllstoffen und/oder Lichtschutzmitteln, und
d) insgesamt 0 bis 10 Gew. -%, besonders bevorzugt 0,5 bis 5 Gew.-% innerer und/oder äußerer Weichmacher, vorzugsweise ausgewählt aus Phthalaten, Glycerin-Fettsäure-Estern oder flüssigen ungesättigten niedermolekularen Verbindungen, die keine Komponenten a) oder b) darstellen.

Um im erfindungsgemäßen Verfahren sicher zu stellen, dass die Härte der Beschichtung (B) derjenigen der Beschichtung (A) übertrifft, ist in der im Schritt iv) des erfindungsgemäßen Verfahrens aufgebrachten zweiten Zusammensetzung vorzugsweise ein jeweils geringerer Gewichtsanteil der jeweils gleichen inneren und/oder äußeren Weichmachern enthalten als in der im Schritt ii) aufgebrachten ersten Zusammensetzung, besonders bevorzugt sind keine inneren und/oder äußeren Weichmacher ausgewählt aus Phthalaten, Glycerin-Fettsäure-Estern oder flüssigen ungesättigten niedermolekularen Verbindungen, die keine Komponenten a) oder b) darstellen, enthalten.
Die Härte der Schicht kann vorzugsweise auch über die Art der Komponenten a) und b) entsprechend variiert werden. So liefern Zusammensetzungen enthaltend Acrlyat-modifizierte Polyesterharze gemäß Komponente a) eher harte Beschichtungen, während Acrlyat-modifizierte Polyurethanharze weichere Beschichtungen ergeben. Die monofunktionellen flüssigen (Meth)acrylat- oder di-, tri-, oder poly(Meth)acrylatverbindungen gemäß Komponente b) können in strahlungshärtenden Zusammensetzungen des erfindungsgemäßen Verfahrens die Funktion eines inneren Weichmachers übernehmen, insofern sie beispielsweise langkettige Alkylreste aufweisen.

Die Anordnung aus drahtförmigen Einzelelementen kann in den Schritten ii) und iv) des erfindungsgemäßen Verfahrens mit den bekannten Applikationsmethoden mit der jeweiligen strahlungshärtenden Zusammensetzung versehen werden. Werden Anordnungen aus umgeformten drahtförmigen Einzelelementen beschichtet, sind vorzugsweise die in der Lackiertechnik gebräuchlichen Spritzsysteme wie z.B. airless, air-assisted oder elektrostratisch unterstützte Spritzverfahren geeignet, oder auch der manuelle Pinselauftrag. In besonders bevorzugter Weise wird die jeweilige Zusammensetzung auf eine ebene Drahtbandoberfläche durch Fluten/Abquetschen, Spritzen/Abquetschen, geeignete Abstreifer- oder Walzapplikationen aufgebracht.
Für die Applikation der Beschichtungen (A) und (B) sollte die Viskosität der jeweiligen Zusammenstzungen in den Schritten ii) und iv) einen bestimmten Wert nicht überschreiten. Grundsätzlich sind Viskositäten der Zusammensetzungen von 30.000 bis 100.000 mPas bevorzugt, jedoch sollte die Viskosität der ersten Zusammensetzung vorzugsweise kleiner als 45.000 mPas sein, während diejenige der zweiten Zusammensetzung vorzugsweise kleiner als 60.000 mPas ist. Höhere Viskositäten erschweren eine gleichmäßige Auftragung der Zusammensetzungen in den Schritten ii) und iv) des ersfindungsgemäßen Verfahrens und damit die Bildung einer geschlossen Acrylat-Beschichtung. Allerdings kann bei einem moderaten Aufheizen der Anordnung von drahtförmigen Einzelelementen, insbesondere der Drahtbänder, auch mit höher viskosen Zusammensetzungen gearbeitet werden.

Die Applikation beider Zusammensetzungen in den Schritten ii) und iv) geschieht im Allgemeinen bei Temperaturen zwischen 0 und 90°C, bevorzugt 15 und 70°C. Danach wird die jeweilige Zusammensetzung durch energiereiche Strahlung, wie zum Beispiel UV-Strahlung, Elektronenstrahlung oder γ-Strahlung vernetzt. Die Elektronenstrahlung soll Energiewerte zwischen 150 und 350 keV aufweisen. Bevorzugt ist eine Vernetzung durch UV-Strahlung, insbesondere mit einer Wellenlänge von 150 bis zu 800 nm, besonders bevorzugt zwischen 200 und 450 nm. Entsprechende Strahlungsquellen sind dem Fachmann bekannt. Die Strahlungsintensität und die Dauer der Bestrahlung hängen von den Verfahrensbedingungen ab, z.B. Abstand der Strahlungsquelle oder relative Bewegung zwischen Quelle und Substrat. Die Dauer liegt jedoch im Allgemeinen unter 60 sec, bevorzugt zwischen 0,001 und 30 sec. Die jeweiligen Anlagenparameter können vom Fachmann durch einfache Anpassung bestimmt werden.

In einer besonderen Verfahrensausführung kann der Anteil an Sauerstoff in der Zone oberhalb des zu vernetzenden Substrats reduziert werden. Hierbei soll er insbesondere unterhalb von 3000 ppm liegen, bevorzugt unter 1000 ppm. Das kann beispielsweise durch teilweisen oder vollständigen Austausch der in der Vernetzungszone vorhandenen Umgebungsluft durch inerte Gase geschehen, z.B. Argon, Stickstoff, CO₂ oder Gemische davon. Ein Vorteil dieser Verfahrensausführung liegt darin, dass die benötigte Konzentration an Fotoinitiator in der jeweiligen strahlungshärtenden Zusammensetzung verringert werden kann.

Eine weitere Ausführungsform des erfindungsgemäßen Verfahrens umfasst den zusätzlichen Schritt, dass nach dem Auftragen der jeweiligen Zusammensetzung zunächst eine für die verwendete energiereiche Strahlung durchlässige Folie auf die zu verklebende Anordnung aufgebracht wird. Es ist möglich, räumlich geformte Anordnungen mit einer solchen Folie zu versehen, jedoch ist es bevorzugt, dass die Anordnung der drahtförmigen Einzelelemente als Drahtband vorliegt. Bevorzugt wird ein maschinelles Auftragsverfahren durchgeführt. Dabei kann beispielsweise die reißfeste Folie von einer Vorratsrolle abgezogen und mittels einer Walze blasenfrei ein- oder beidseitig auf die Oberfläche des Drahtbandes aufgetragen werden. Nach diesem Verfahrensschritt wird die jeweilige Zusammensetzung unter der Folie durch Strahlung vernetzt. Ein Vorteil dieses Verfahrens liegt darin, dass unter der Folie die Aushärtung unter inerten Bedingungen erfolgt, d.h. insbesondere unter Sauerstoffausschluss.
Die Folie besteht beispielsweise aus Polyethylen, Polypropylen, PET oder Gemischen davon. Sie ist gefärbt oder bevorzugt transparent. Die Folie soll nicht mit der jeweiligen Zusammensetzung reagieren. Sie ist reißfest, so dass sie in einem späteren Verarbeitungsschritt durch Abziehen von der Oberfläche des Drahtbandes entfernt werden kann. Das kann auch beim Endverbraucher geschehen, so dass die Folie als Schutz für den Gegenstand bei Weiterverarbeitung und/oder Transport dienen kann.

Insgesamt stellt das erfindungsgemäße Verfahren einen Zweistufenprozess dar, wobei die einzelnen aufeinanderfolgenden Stufen verfahrenstechnisch identisch ausgestaltet sind und jeweils die Aufbringung der ersten oder zweiten Zusammensetzung und deren Strahlungshärtung, vorzugsweise mittels UV-Bestrahlung, beinhalten. Weiterhin ist ein Zweistufenprozess nach der Art eines Linienbandverfahrens bevorzugt bei dem Drähte, ähnlich einem Webstuhl, von Spulen abgerollt und über Kämme geführt, ausgerichtet und nebeneinander angeordnet werden. Bei dickeren Drähten können zusätzlich Richtrollen verwendet werden. Möglich sind auch Stauchrollen, die die Drähte abflachen und so in die typische Querschnittsform von Heftklammern bringen. In der ersten Stufe wird die erste Zusammensetzung gemäß Schritt ii) des erfindungsgemäßen Verfahrens mit einem Spaltapplikator ähnlich einem Kastenrakel gleichzeitig auf Unter- und Oberseite aufgebracht und anschließend unter UV-Bestrahlung ausgehärtet. In der nachfolgenden zweiten Stufe des bevorzugten Linienbandverfahrens wird die zweite Zusammensetzung gemäß Schritt iv) des erfindungsgemäßen Verfahrens auf das erstbeschichtete Drahtband definiert aufgetragen und anschließend ebenfalls unter UV-Bestrahlung ausgehärtet.

Der Vorteil der Ausübung des erfindungsgemäßen Verfahrens im Linienbandverfahren besteht in der schnellen Durchlaufzeit des Drahtbandes, die aufgrund der kurzen Aushärtezeit der Acrylat-basierten Zusammensetzungen unter UV-Bestrahlung möglich wird.

In einem weiteren Aspekt umfasst die vorliegende Erfindung ebenso die Anordnung der verklebten drahtförmigen Einzelelemente in Form des Drahtbandes oder des bereits für die Verwendung als Magazin von Befestigungselementen entsprechend umgeformten Drahtbandes. Erfindungsgemäß ist demnach auch die Anordnung aus einer Mehrzahl von drahtförmigen Einzelelementen, wobei jedes Einzelelement im Wesentlichen dieselbe Raumform aufweist, bei der zwei benachbarte Einzelelemente jeweils über eine stoffschlüssige Verbindung miteinander verbunden sind, die derart ausgestaltet ist, dass eine Sollbruchfläche zur Trennung der Einzelelemente voneinander ausgebildet ist, wobei die stoffschlüssige Verbindung zwischen zwei benachbarten Einzelelementen zumindest im Bereich der Sollbruchfläche aus einem Zweischichtsystem ausgebildet aus zwei ausgehärteten Polymerbeschichtungen (A) und (B) unterschiedlicher Härte besteht, wobei an der Sollbruchfläche die innere Beschichtung (A), die ausschließlich Kontaktflächen mit den benachbarten Einzelelementen und mit der äußeren Beschichtung B aufweist, stets die weichere Polymerbeschichtung darstellt, wobei beide Polymerbeschichtungen (A) und (B) Beschichtungen auf Basis von Acrylatharzen darstellen.

Hierbei ist es bevorzugt, dass die stoffschlüssige Verbindung der drahtförmigen Einzelelemente die Mehrzahl von drahtförmigen Einzelelementen vollständig umschließt und aus einem Zweischichtsystem ausgebildet aus zwei Polymerbeschichtungen (A) und (B) unterschiedlicher Härte besteht, wobei die innere Beschichtung (A), die ausschließlich Kontaktflächen mit benachbarten Einzelelementen und mit der äußeren Beschichtung B aufweist, stets die weichere Polymerbeschichtung darstellt.

Diese besondere Ausführungsform entspricht der stoffschlüssigen Anordnung von drahtförmigen Einzelelementen wie sie durch das bevorzugte Linienbandverfahren im Zweistufenprozess erzeugt wird.

Insbesondere erfolgt die Anordnung der drahtförmigen Einzelelemente, die entweder eine Längsachse aufweisen oder so umgeformt sind, dass sie eine Ebene definieren, bevorzugt derart, dass die Sollbruchflächen entweder parallel zur Längsachse oder parallel zur vom Einzelelement definierten Ebene angeordnet sind. Das bevorzugte Linienbandverfahren liefert die Anordnung von drahtförmigen Einzelelementen parallel zu deren Längsachse, so dass ein endloses Drahtband von verklebten Einzeldrähten entsteht.

Eine stoffschlüssige Verbindung der drahtförmigen Einzelelemente auf Basis eines Zweischichtsystems von Acrylatharzen liefert insbesondere dann eine hinreichende Flexibilität und Stabilität der Anordnung aus einer Mehrzahl von drahtförmigen Einzelelementen, wenn die maximale Länge im Querschnitt bzw. der Durchmesser der drahtförmigen Einzelelemente vorzugsweise nicht mehr als 5 mm, besonders bevorzugt nicht mehr als 2 mm beträgt. Die maximale Länge im Querschnitt bzw. der Querschnittsdurchmesser der drahtförmigen Einzelelemente sollte vorzugsweise jedoch zumindest 0,2 mm betragen.

Das flächenbezogene Schichtgewicht des Zweischichtsystems und somit beider Beschichtungen (A) und (B) beträgt für eine hinreichende stoffschlüssige Verbindung der benachbarten drahtförmigen Einzelelemente vorzugsweise zumindest 5 g/m². Allerdings sollte das Schichtgewicht vorzugsweise 50 g/m², besonders bevorzugt 20 g/m² nicht überschreiten, um den Materialverbrauch möglichst niedrig zu halten. Dies entspricht bei der Beschichtung von Drahtbändern in etwa einer Menge von 0,5 bis 3 g, vorzugsweise bis 1,5 g des Zweischichtsystems auf 100 g Draht mit einem Drahtdurchmesser von 0,9mm.

Des Weiteren sind die drahtförmigen Einzelelemente der erfindungsgemäßen Anordnung vorzugsweise metallisch und zudem bevorzugt aus Stahldraht oder verzinktem Stahldraht gefertigt.

Vorzugsweise ist die erfindungsgemäße Anordnung der Mehrzahl von drahtförmigen Einzelelementen ein verklebtes Drahtband oder ein umgeformtes verklebtes Drahtband, besonders bevorzugt ein U-förmig umgeformtes verklebtes Drahtband, insbesondere ein Heftklammerstapel.

### Figurenbezeichnung:

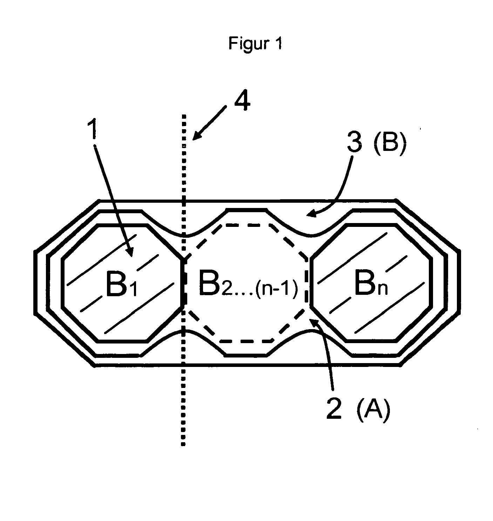

Figur 1 stellt eine schematische Zeichnung eines im Linienbandverfahren hergestellten verklebten Drahtbandes gemäß einer bevorzugten Ausführungsform der erfindungsgemäßen Anordnung einer Mehrzahl Bₙ von drahtförmigen Einzelelementen 1 dar, wobei die drahtförmigen Einzelelemente 1 geformte Drähte mit oktagonalem Querschnitt sind, die in einer Ebene parallel zu einer nicht gezeigten Längsachse der drahtförmigen Einzelelemente 1 angeordnet sind, wobei die Längsachsen der drahtförmigen Einzelelemente 1 senkrecht auf der Figurenebene stehen. Die stoffschlüssige Verbindung der Einzelelemente 1 wird dabei erfindungsgemäß über ein Zweischichtsystem bestehend aus einer ersten Beschichtung 2 und einer zweiten Beschichtung 3 auf Basis von Acrylatharzen mit unterschiedlicher Härte ausgebildet, wobei das Zweischichtsystem das abgebildete Drahtband vollständig umschließt. Eine Sollbruchfläche 4 der stoffschlüssigen Verbindung zwischen den benachbarten drahtförmigen Einzelelementen 1 verläuft orthogonal zur Ebene des Drahtbandes und ist die Spiegelebene benachbarter Einzelelemente 1.

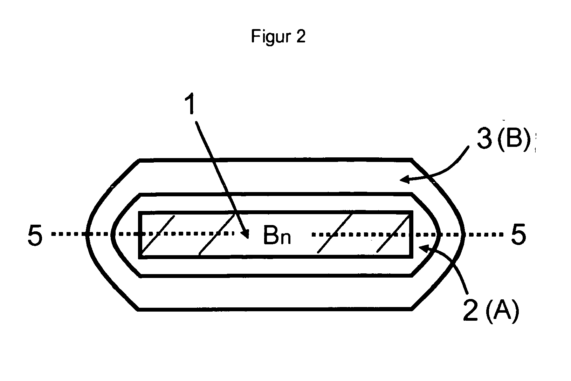

Die Figur 2 stellt eine schematische Zeichnung der Aufsicht auf die Sollbruchfläche 4 entlang einer Längsachse 5 des drahtförmigen Einzelelementes 1 der Figur 1 dar. Das Zweischichtsystem bestehend aus einer ersten Beschichtung 2 und einer zweiten Beschichtung 3 auf Basis von Acrylatharzen mit unterschiedlicher Härte umschließt, wie aus der Zusammenschau mit der Figur 1 deutlich wird, die erfindungsgemäße Anordnung, das verklebte Drahtband, vollständig.

### Bezugszeichenliste:

1: Drahtförmiges Einzelelement
2: Beschichtung (A) auf Basis eines Acrylatharzes
3: Beschichtung (B) auf Basis eines Acrylatharzes
4: Sollbruchfläche
5: Längsachse des drahtförmigen Einzelelementes

## Patentansprüche

1. Anordnung aus einer Mehrzahl (B₁-Bₙ) von drahtförmigen Einzelelementen (1), wobei jedes Einzelelement (1) im Wesentlichen dieselbe Raumform aufweist, bei der zwei benachbarte Einzelelemente jeweils über eine stoffschlüssige Verbindung miteinander verbunden sind, die derart ausgestaltet ist, dass eine Sollbruchfläche (4) zur Trennung der Einzelelemente voneinander ausgebildet ist, wobei die stoffschlüssige Verbindung zwischen zwei benachbarten Einzelelementen zumindest im Bereich der Sollbruchfläche aus einem Zweischichtsystem (A,B) ausgebildet aus zwei Polymerbeschichtungen (A) und (B) unterschiedlicher Härte besteht, wobei an der Sollbruchfläche die innere Beschichtung (A), die ausschließlich Kontaktflächen mit den benachbarten Einzelelementen und mit der äußeren Beschichtung (B) aufweist, stets die weichere Polymerbeschichtung darstellt, **dadurch gekennzeichnet, dass** beide Polymerbeschichtungen (A) und (B) Beschichtungen auf Basis von Acrylatharzen darstellen.

2. Anordnung gemäß Anspruch 1, **dadurch gekennzeichnet, dass** die stoffschlüssige Verbindung der drahtförmigen Einzelelemente die Mehrzahl von drahtförmigen Einzelelementen (1) vollständig umschließt.

3. Anordnung gemäß einem oder beiden der vorherigen Ansprüche, **dadurch gekennzeichnet, dass** jedes drahtförmige Einzelelement (1) eine Längsachse aufweist oder so umgeformt ist, dass es eine Ebene definiert, die parallel zur Sollbruchfläche (4) liegt, wobei die Einzeielemente (1) entweder parallel zur Längsachse oder parallel zur vom Einzelelement definierten Ebene angeordnet sind.

4. Anordnung gemäß einem oder mehreren der vorherigen Ansprüche, **dadurch gekennzeichnet, dass** die drahtförmigen Einzelelemente (1) einen Drahtdurchmesser von zumindest 0,2 mm, aber nicht mehr als 5 mm, vorzugsweise nicht mehr als 2 mm aufweisen.

5. Anordnung gemäß einem oder mehreren der vorherigen Ansprüche, **dadurch gekennzeichnet, dass** das Schichtgewicht der zwei Polymerbeschichtungen (A) und (B) insgesamt nicht größer als 50 g/m², vorzugsweise nicht größer als 20 g/m², aber zumindest 5 g/m² beträgt.

6. Anordnung gemäß einem oder mehreren der vorherigen Ansprüche, **dadurch gekennzeichnet, dass** die drahtförmigen Einzelelemente (1) metallisch und vorzugsweise aus Stahldraht oder verzinktem Stahldraht gefertigt sind.

7. Verfahren zur Herstellung einer Anordnung nach einem oder mehreren der Ansprüche 1 bis 6, **dadurch gekennzeichnet, dass** es mindestens die folgenden Verfahrensschritte umfasst:
i) Anordnen einer Mehrzahl (B₁-Bₙ) von drahtförmigen Einzelelementen (1) in einer Ebene parallel nebeneinander oder parallel zur vom umgeformten Einzelelement definierten Ebene und in Kontakt miteinander,
ii) ein- oder beidseitiges Beschichten (A) dieser Anordnung mit einer ersten Zusammensetzung, die durch Strahlungseinwirkung härtbare Polymere mit Acrylatgruppen sowie innere oder äußere Weichmacher enthält,
iii) Härten der im Schritt ii) aufgebrachten Beschichtung (A) durch Einwirkung von Strahlung, vorzugsweise von UV-Strahlung,
iv) ein- oder beidseitiges Überschichten (B) der in Schritt iii) gehärteten ersten Zusammensetzung mit einer zweiten Zusammensetzung, die durch Strahlungswirkung härtbare Polymere mit Acrylatgruppen enthält und die so zusammengesetzt ist, dass sie nach dem Härten eine größere Härte aufweist als die gehärtete erste Zusammensetzung,
v) Härten der im Schritt ii) aufgebrachten Beschichtung (B) durch Einwirkung von Strahlung, vorzugsweise von UV-Strahlung.

8. Verfahren nach Anspruch 7, **dadurch gekennzeichnet, dass** die erste und die zweite Zusammensetzung jeweils weniger als 2 Gew.-% an Komponenten enthalten, die beim Aushärten der Beschichtung verdampfen.

9. Verfahren nach einem oder beiden der Ansprüche 7 und 8, **dadurch gekennzeichnet, dass** die erste Zusammensetzung im Schritt ii) derart ausgewählt ist, dass für einen ausgehärteten freien Film dieser Zusammensetzung mit einer Dicke von 1 mm und einer Länge und Breite von 1 cm eine maximale Streckung des ausgehärteten Filmes von mehr als 5 mm resultiert, bei der der ausgehärtete Film abreißt.

10. Verfahren nach einem oder mehreren der Ansprüche 7 bis 9, **dadurch gekennzeichnet, dass** die zweite Zusammensetzung im Schritt iv) derart ausgewählt ist, dass für einen ausgehärteten freien Film dieser Zusammensetzung mit einer Dicke von 1 mm und einer Länge und Breite von 1 cm eine maximale Streckung des ausgehärteten Filmes von nicht mehr als 5 mm resultiert, bei der der ausgehärtete Film abreißt.

11. Verfahren nach einem oder mehreren der Ansprüche 7 bis 10, **dadurch gekennzeichnet, dass** die erste Zusammensetzung ein Säuregruppen-haltiges Polymer enthält.

12. Verfahren nach Anspruch 11, **dadurch gekennzeichnet, dass** die erste Zusammensetzung bezogen auf die gesamte Zusammensetzung folgende Komponenten enthält:
a) 40 bis 90 Gew.-% mindestens eines oligomeren linearen oder verzweigten Epoxy-, Polyester-, Polyether- und/oder Polyurethan-(Meth)acrylats,
b) 5 bis 60 Gew.-%, vorzugsweise 10 bis 60 Gew.-% mindestens einer monofunktionellen flüssigen (Meth)acrylat- oder di-, tri-, oder poly(Meth)acrylatverbindung,
c) 0,1 bis 20 Gew.-% mindestens einer saure Gruppen enthaltenden (Meth)acrylatverbindung, sowie
d) insgesamt 0,1 bis 20 Gew.-% Fotoinitiatoren sowie gegebenenfalls lacktechnische Hilfsstoffe ausgewählt aus Verlaufsmitteln, Pigmenten, Farbstoffen, Füllstoffen und/oder Lichtschutzmitteln, und
e) insgesamt 0,5 bis 20 Gew.-% innerer und/oder äußerer Weichmacher vorzugsweise ausgewählt aus Phthalaten, Glycerin-Fettsäure-Estern oder flüssigen ungesättigten niedermolekularen Verbindungen, die keine Komponenten a) oder b) darstellen.

13. Verfahren nach Anspruch 12, **dadurch gekennzeichnet, dass** die zweite Zusammensetzung bezogen auf die gesamte Zusammensetzung folgende Komponenten enthält:
a) 40 bis 90 Gew.-% mindestens eines oligomeren linearen oder verzweigten Epoxy-, Polyester-, Polyether- und/oder Polyurethan (Meth)acrylats,
b) 5 bis 60 Gew.-%, vorzugsweise 10 bis 60 Gew.-% mindestens einer monofunktionellen flüssigen (Meth)acrylat- oder di-, tri-, oder poly(Meth)acrylatverbindung,
c) insgesamt 0,1 bis 20 Gew.-% Fotoinitiatoren sowie gegebenenfalls lacktechnische Hilfsstoffe ausgewählt aus Verlaufsmitteln, Pigmenten, Farbstoffen, Füllstoffen und/oder Lichtschutzmitteln, und
d) insgesamt 0 bis 10 Gew. -% innerer und/oder äußerer Weichmacher, vorzugsweise ausgewählt aus Phthalaten, Glycerin-Fettsäure-Estern oder flüssigen ungesättigten niedermolekularen Verbindungen, die keine Komponenten a) oder b) darstellen.

## Claims

1. An arrangement made up of a plurality (B₁-Bₙ) of wire-shaped individual elements (1), each individual element (1) having substantially the same three-dimensional shape, in which arrangement each two adjacent individual elements are connected to one another via an intermaterial connection which is configured in such a way that a preset breaking surface (4) for separation of the individual elements from one another is constituted, the intermaterial connection between two adjacent individual elements being constituted, at least in the region of the preset breaking surface, from a two-layer system (A,B) constituted from two polymer coatings (A) and (B) of differing hardness, such that at the preset breaking surface the inner coating (A), which has contact surfaces exclusively with the adjacent individual elements and with the outer coating (B), always represents the softer polymer coating
**characterised in that** both polymer coatings (A) and (B) represent coatings based on acrylate resins.

2. The arrangement according to Claim 1, **characterised in that** the intermaterial connection of the wire-shaped individual elements (1) completely surrounds the plurality of wire-shaped individual elements (1).

3. The arrangement according to one or both of the preceding claims, **characterised in that** each wire-shaped individual element (1) has a longitudinal axis or is reshaped in such a way that it defines a plane that lies parallel to the preset breaking surface (4), the individual elements (1) being arranged either parallel to the longitudinal axis or parallel to the plane defined by the individual element.

4. The arrangement according to one or more of the preceding claims, **characterised in that** the wire-shaped individual elements (1) have a wire diameter of at least 0.2 mm but not more than 5 mm, by preference not more than 2 mm.

5. The arrangement according to one or more of the preceding claims, **characterised in that** the layer weight of the two polymer coatings (A) and (B) is in total no greater than 50 g/m², by preference no greater than 20 g/m², but at least 5g/m².

6. The arrangement according to one or more of the preceding claims, **characterised in that** the wire-shaped individual elements (1) are metallic and are produced by preference from steel wire or galvanized steel wire.

7. A method for manufacturing an arrangement according to one or more of Claims 1 to 6, **characterised in that** it encompasses at least the following method steps:
i) arranging a plurality (B₁-Bₙ) of wire-shaped individual elements (1) in a plane parallel side by side or parallel to the plane defined by the reshaped individual element, and in contact with one another;
ii) coating (A) said arrangement, on one or both sides, with a first composition that contains polymers curable by the action of radiation and having acrylate groups, as well as internal or external plasticizers;
iii) curing the coating (A) applied in step ii) by the action of radiation, by preference UV radiation;
iv) coating (B) the first composition cured in step iii), on one or both sides, with a second composition which contains polymers curable by the action of radiation and having acrylate groups, and which has a composition such that after curing it exhibits a greater hardness than the cured first composition;
v) curing the coating (B) applied in step iv) by the action of radiation, by preference UV radiation.

8. The method according to Claim 7, wherein the first and the second composition each contain less than 2 wt% of components that vaporize upon curing of the coating.

9. The method according to one or both of Claims 7 and 8, **characterised in that** the first composition in step ii) is selected in such a way that for a cured free film of that composition having a thickness of 1 mm and a length and width of 1 cm, the resulting maximum stretching of the cured film at which the cured film breaks is more than 5 mm.

10. The method according to one or more of Claims 7 to 9, **characterised in that** the second composition in step iv) is selected in such a way that for a cured free film of that composition having a thickness of 1 mm and a length and width of 1 cm, the resulting maximum stretching of the cured film at which the cured film breaks is no more than 5 mm.

11. The method according to one or more of Claims 7 to 10, **characterised in that** the first composition contains an acid-group-containing polymer.

12. The method according to Claim 11, **characterised in that** the first composition contains, based on the entire composition, the following components:
a) 40 to 90 wt% of at least one oligomeric linear or branched epoxy (meth)acrylate, polyester (meth)acrylate, polyether (meth)acrylate, and/or polyurethane (meth)acrylate;
b) 5 to 60 wt%, by preference 10 to 60 wt%, of at least one monofunctional liquid (meth)acrylate compound or di-, tri-, or poly(meth)acrylate compound;
c) 0.1 to 20 wt% of at least one acid-group-containing (meth)acrylate compound; as well as
d) a total of 0.1 to 20 wt% photoinitiators, as well as optionally coating-technology adjuvants selected from leveling agents, pigments, dyes, fillers, and/or light protection agents; and
e) a total of 0.5 to 20 wt% internal and/or external plasticizers, selected by preference from phthalates, glycerol fatty acid esters, or liquid unsaturated low-molecular-weight compounds that do not represent components a) or b).

13. The method according to Claim 12, **characterised in that** the second composition contains, based on the entire composition, the following components:
a) 40 to 90 wt% of at least one oligomeric linear or branched epoxy (meth)acrylate, polyester (meth)acrylate, polyether (meth)acrylate, and/or polyurethane (meth)acrylate;
b) 5 to 60 wt%, by preference 10 to 60 wt%, of at least one monofunctional liquid (meth)acrylate compound or di-, tri-, or poly(meth)acrylate compound;
c) a total of 0.1 to 20 wt% photoinitiators, as well as optionally coating-technology adjuvants selected from leveling agents, pigments, dyes, fillers, and/or light protection agents; and
d) a total of 0 to 10 wt% internal and/or external plasticizers, selected by preference from phthalates, glycerol fatty acid esters, or liquid unsaturated low-molecular-weight compounds that do not represent components a) or b).

## Revendications

1. Agencement de plusieurs (B₁-Bₙ) éléments individuels filiformes (1), chaque élément individuel (1) présentant essentiellement la même forme spatiale, dans lequel deux éléments individuels voisins sont chaque fois reliés l'un à l'autre via une liaison par matière qui est réalisée de telle sorte que l'on met en oeuvre une surface de la rupture de consigne (4) pour la séparation des éléments individuels les uns des autres, la liaison par matière entre deux éléments individuels voisins étant réalisée, au moins dans la zone de la surface de rupture de consigne, par un système bicouche (A, B) constitué par deux enductions polymères (A) et (B) de dureté différente, l'enduction interne (A), qui présente à titre exclusif des surfaces de contact avec les éléments individuels voisins et avec l'enduction externe (B), représentant toujours, à la surface de rupture de consigne, l'enduction polymère la plus tendre, **caractérisé en ce que** les deux enductions polymères (A) et (B) représentent des enductions à base de résines d'acrylate.

2. Agencement selon la revendication 1, **caractérisé en ce que** la liaison par matière des éléments individuels filiformes (1) entoure complètement la multitude d'éléments individuels filiformes (1).

3. Agencement selon l'une quelconque des revendications précédentes ou les deux, **caractérisé en ce que** chaque élément individuel filiforme (1) présente un axe longitudinal ou bien est déformé de telle sorte qu'il définit un plan qui est parallèle à la surface de rupture de consigne (4), les éléments individuels (1) étant disposés soit parallèlement à l'axe longitudinal, soit parallèlement au plan défini par l'élément individuel.

4. Agencement selon une ou plusieurs des revendications précédentes, **caractérisé en ce que** les éléments individuels filiformes (1) présentent un diamètre du fil d'au moins 0,2 mm, mais qui n'est pas supérieur à 5 mm, de préférence qui n'est pas supérieur à 2 mm.

5. Agencement selon une ou plusieurs des revendications précédentes, **caractérisé en ce que** le poids de la couche des deux enductions polymères (A) et (B) n'est au total pas supérieur à 50 g/m², de préférence pas supérieur à 20 g/m², mais s'élève à au moins 5 g/m².

6. Agencement selon une ou plusieurs des revendications précédentes, **caractérisé en ce que** les éléments individuels filiformes (1) sont réalisés en métal, de préférence à partir d'un fil en acier ou d'un fil en acier zingué.

7. Procédé pour la fabrication d'un agencement selon une ou plusieurs des revendications 1 à 6, **caractérisé en ce qu'**il comprend au moins les étapes opératoires suivantes dans lesquelles :
i) on agence une multitude (B₁-Bₙ) d'éléments individuels filiformes (1) dans un plan parallèlement les uns aux autres ou parallèlement au plan défini par l'élément individuel déformé et en contact les uns avec les autres ;
ii) on applique une enduction (A) sur un côté ou sur les deux côtés de cet agencement avec une première composition qui contient des polymères durcissables par exposition à un rayonnement et comprenant ainsi que des plastifiants internes ou externes ;
iii) on durcit l'enduction (A) appliquée à l'étape ii) par exposition à un rayonnement, de préférence un rayonnement ultraviolet ;
iv) on applique une enduction supérieure (B) sur un côté ou sur les deux côtés de la première composition durcie à l'étape iii) avec une deuxième composition qui contient des polymères durcissables par exposition à un rayonnement et comprenant des groupes acrylate et dont la composition est telle qu'elle présente après le durcissement une dureté supérieure à celle de la première composition durcie ;
v) on durcit l'enduction (B) appliquée à l'étape iv) par exposition à un rayonnement, de préférence un rayonnement ultraviolet.

8. Procédé selon la revendication 7, **caractérisé en ce que** la première composition et la deuxième composition contiennent chacune moins de 2 % en poids de composants qui s'évaporent lors du durcissement de l'enduction.

9. Procédé selon l'une quelconque des revendications 7 et 8 ou les deux, **caractérisé en ce que** la première composition à l'étape ii) est choisie de telle sorte que, pour un film libre complètement durci de cette composition possédant une épaisseur de 1 mm et une longueur et une largeur de 1 cm, on obtient un étirage maximal du film complètement durci supérieur à 5 mm auquel le film durci se déchire.

10. Procédé selon une ou plusieurs des revendications 7 à 9, **caractérisé en ce que** la deuxième composition à l'étape iv) est choisie de telle sorte que, pour un film libre complètement durci de cette composition possédant une épaisseur de 1 mm et une longueur et une largeur de 1 cm, on obtient un étirage maximal du film complètement durci qui n'est pas supérieur à 5 mm auquel le film durci se déchire.

11. Procédé selon une ou plusieurs des revendications 7 à 10, **caractérisé en ce que** la première composition contient un polymère contenant des groupes acides.

12. Procédé selon la revendication 11, **caractérisé en ce que** la première composition, rapportée à la composition totale, contient les composants suivants :
a) de 40 à 90 % en poids d'au moins un époxy(méth)acrylate, un polyester(méth)acrylate, un polyéther(méth)acrylate et/ou un polyuréthane(méth)acrylate oligomère linéaire ou ramifié ;
b) de 5 à 60 % en poids, de préférence de 10 à 60 % en poids d'au moins un composé liquide monofonctionnel de (méth)acrylate ou de di-, tri- ou poly(méth)acrylate ;
c) de 0,1 à 20 % en poids d'au moins un composé de (méth)acrylate contenant des groupes acides ; et
d) au total, de 0,1 à 20 % en poids de photoinitiateurs et éventuellement d'adjuvants du domaine technique des laques, des vernis et/ou des peintures, choisis parmi des agents améliorant l'écoulement, des pigments, des colorants, des matières de charge et/ou des agents de protection contre l'effet de la lumière ; et
e) au total, de 0,5 à 20 % en poids de plastifiants internes et/ou externes, de préférence choisis parmi des phtalates, des esters d'acides gras de glycérol ou des composés liquides insaturés à bas poids moléculaire qui ne représentent pas les composants a) ou b).

13. Procédé selon la revendication 12, **caractérisé en ce que** la deuxième composition, rapportée à la composition totale, contient les composants suivants :
a) de 40 à 90 % en poids d'au moins un époxy(méth)acrylate, un polyester(méth)acrylate, un polyéther(méth)acrylate et/ou un polyuréthane(méth)acrylate oligomère linéaire ou ramifié ;
b) de 5 à 60 % en poids, de préférence de 10 à 60 % en poids d'au moins un composé liquide monofonctionnel de (méth)acrylate ou de di-, tri- ou poly(méth)acrylate ;
c) au total, de 0,1 à 20 % en poids de photoinitiateurs et éventuellement d'adjuvants du domaine technique des laques, des vernis et/ou des peintures, choisis parmi des agents améliorant l'écoulement, des pigments, des colorants, des matières de charge et/ou des agents de protection contre l'effet de la lumière ; et
d) au total, de 0 à 10 % en poids de plastifiants internes et/ou externes, de préférence choisis parmi des phtalates, des esters d'acides gras de glycérol ou des composés liquides insaturés à bas poids moléculaire qui ne représentent pas les composants a) ou b).
